# EUROPÄISCHE PATENTANMELDUNG

(11) **EP 3 595 046 A1**
(43) Veröffentlichungstag der Anmeldung: **15.01.2020**
(21) Anmeldenummer: 18182397.2
(22) Anmeldetag: 09.07.2018
(51) Int. Cl.: H01M 2/34, H01M 10/42

(54) **AKKUSCHUTZVORRICHTUNG**

(71) Anmelder: Hilti Aktiengesellschaft, 9494 Schaan (LI)
(72) Erfinder: Nitzschner, Michael, 86156 Augsburg (DE); Candussio, Michael, 82140 Olching (DE); Richter, Rene, 86199 Augsburg (DE); Guggemos, Andreas, 86825 Bad Wörishofen (DE)
(74) Vertreter: Hilti Aktiengesellschaft Corporate Intellectual Property

(57) **Zusammenfassung**

Schutzvorrichtung zum Schutz eines Akkupacks mit wenigstens einer Akkuzelle vor einer Überspannung in wenigstens einer Leitung des Akkupacks.

Verfahren zum Schutz eines Akkupacks vor einer Überspannung, wobei der Akkupack wenigstens eine Akkuzelle sowie eine Schutzvorrichtung mit einer Sicherungseinrichtung, welche wenigstens eine Sicherung enthält, einer Kurzschlussleitung zum wahlweisen Kurzschließen der wenigstens eine Akkuzelle über die wenigstens eine Sicherung, einer Überwachungseinrichtung mit wenigstens einem Spannungskomparator und wenigstens einem Schalter zum wahlweisen Schließen der Kurzschlussleitung enthält.

## Beschreibung

Die vorliegende Erfindung betrifft eine Schutzvorrichtung zum Schutz eines Akkupacks mit wenigstens einer Akkuzelle vor einer Überspannung in wenigstens einer Leitung des Akkupacks.

Darüber hinaus betrifft die vorliegende Erfindung ein Verfahren zum Schutz eines Akkupacks vor einer Überspannung, wobei der Akkupack wenigstens eine Akkuzelle sowie eine Schutzvorrichtung mit einer Sicherungseinrichtung, welche wenigstens eine Sicherung enthält, einer Kurzschlussleitung zum wahlweisen Kurzschließen der wenigstens eine Akkuzelle über die wenigstens eine Sicherung, einer Überwachungseinrichtung mit wenigstens einem Spannungskomparator und wenigstens einem Schalter zum wahlweisen Schließen der Kurzschlussleitung enthält.

Akkupacks, Akkumulatoren genannt, sind grundsätzlich aus dem Stand der Technik bekannt. Moderne Akkupacks werden mit einer Schutzvorrichtung ausgestattet, um die in dem Akkupack vorhandenen Akkuzellen von einem zu hohen Spannungswert zu schützen. Derartige aus dem Stand der Technik bekannte Schutzvorrichtungen zum Schutz eines Akkupacks vor einer Überspannung weisen jedoch häufig das Problem auf, dass diese relativ groß, komplex und teuer sind.

Es ist daher Aufgabe der vorliegenden Erfindung eine Schutzvorrichtung zum Schutz eines Akkupacks mit wenigstens einer Akkuzelle vor einer Überspannung sowie ein Verfahren zum Schutz eines Akkupacks mit wenigstens einer Akkuzelle vor einer Überspannung bereitzustellen, um das vorstehend beschriebene Problem zu lösen.

Die Aufgabe wird gelöst durch eine Schutzvorrichtung zum Schutz eines Akkupacks mit wenigstens einer Akkuzelle vor einer Überspannung in wenigstens einer Leitung des Akkupacks.

Erfindungsgemäß enthält die Schutzvorrichtung eine Sicherungseinrichtung mit wenigstens einer Sicherung, eine Kurzschlussleitung zum wahlweisen Kurzschließen der wenigstens eine Akkuzelle über die wenigstens eine Sicherung und eine Überwachungseinrichtung mit wenigstens einem Spannungskomparator zum Detektieren eines Überschreitens eines Spannungsschwellwerts durch einen von der Überwachungseinrichtung erfassten Spannungswert und wenigstens einem Schalter zum wahlweisen Schließen der Kurzschlussleitung, wenn der durch den Spannungskomparator erfasste Spannungswert den Spannungsschwellwert für eine vorbestimmte Zeitdauer um einen vorbestimmten Spannungswert übersteigt, sodass ein durch die wenigstens eine Sicherung fließender Strom einen Kurzschlussstromwert der wenigstens einen Sicherung übersteigt, wodurch die wenigstens eine Sicherung die wenigstens eine Leitung des Akkupacks unterbricht. Der Kurzschlussstromwert kann auch als Bemessungsstrom oder Bemessungsstromwert bezeichnet werden.

Gemäß einer vorteilhaften Ausgestaltungsform ist es möglich, dass die wenigstens eine Sicherung als Schmelzsicherung ausgestaltet ist.

Entsprechend einer weiteren vorteilhaften Ausgestaltungsform ist es möglich, dass die Schutzvorrichtung eine Leiterplatte enthält, welche wenigstens eine Durchbohrung zur thermischen Trennung der Sicherungseinrichtung und der Überwachungseinrichtung aufweist. Durch die Durchbohrung kann die Wärmeleitfähigkeit der Leiterplatte unterbrochen oder zumindest verringert werden.

Gemäß einer weiteren vorteilhaften Ausgestaltungsform ist es möglich, dass der wenigstens eine Schalter als Transistor ausgestaltet ist.

Entsprechend einer weiteren vorteilhaften Ausgestaltungsform ist es möglich, dass für jede Sicherung wenigstens ein Schalter vorgesehen ist.

Gemäß einer weiteren vorteilhaften Ausgestaltungsform ist es möglich, dass die Sicherungseinrichtung in der Plusleitung oder in der Minusleitung des Akkupacks positioniert ist.

Die Aufgabe wird ebenfalls gelöst durch ein Verfahren zum Schutz eines Akkupacks vor einer Überspannung, wobei der Akkupack wenigstens eine Akkuzelle, eine Sicherungseinrichtung mit wenigstens einer Sicherung, eine Kurzschlussleitung zum wahlweisen Kurzschließen der wenigstens eine Akkuzelle über die wenigstens eine Sicherung, eine Überwachungseinrichtung mit wenigstens einem Spannungskomparator und wenigstens einen Schalter zum wahlweisen Schließen der Kurzschlussleitung enthält.

Erfindungsgemäß enthält das Verfahren wenigstens die Verfahrensschritte
- Detektieren eines Überschreitens eines Spannungsschwellwerts durch einen von der Überwachungseinrichtung erfassten Spannungswert mit Hilfe des Spannungskomparators und
- Schließen der Kurzschlussleitung, wenn der durch den Spannungskomparator erfasste Spannungswert den Spannungsschwellwert für eine vorbestimmte Zeitdauer um einen vorbestimmten Spannungswert übersteigt, sodass ein durch die wenigstens eine Sicherung fließender Strom einen Kurzschlussstromwert der wenigstens einen Sicherung übersteigt, wodurch die wenigstens eine Sicherung die wenigstens eine Leitung des Akkupacks unterbricht.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: einen schematischen Schaltplan einer erfindungsgemäßen Schutzvorrichtung gemäß einer ersten Ausgestaltungsform;

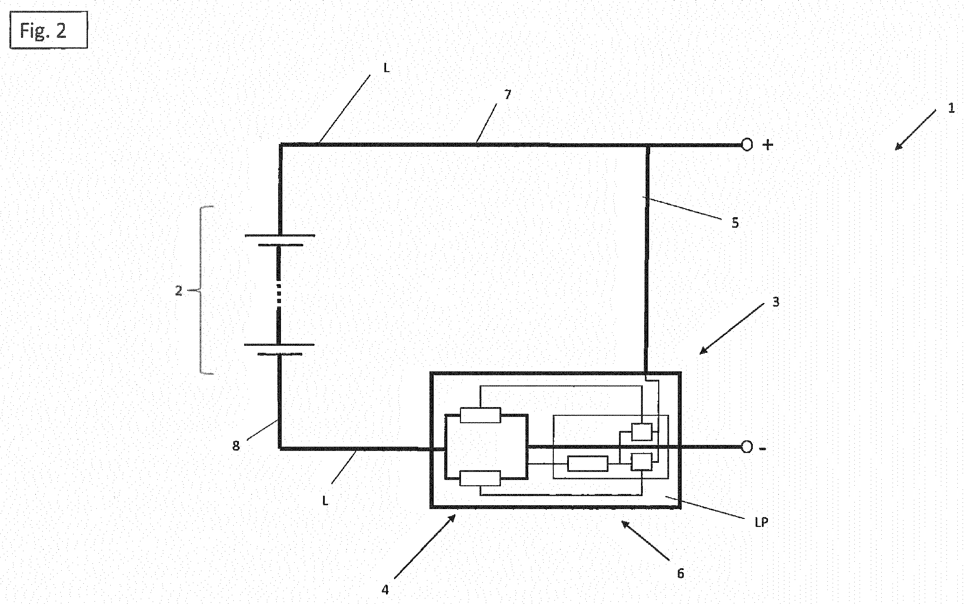

- Fig. 2: einen weiteren schematischen Schaltplan der erfindungsgemäßen Schutzvorrichtung gemäß einer zweiten Ausgestaltungsform;
- Fig. 3: eine Detailansicht der erfindungsgemäßen Schutzvorrichtung mit einer Sicherungseinrichtung, einer Überwachungseinrichtung und einer Durchbohrung; und
- Fig. 4: eine Detailansicht der erfindungsgemäßen Schutzvorrichtung mit einer Sicherungseinrichtung, einer Überwachungseinrichtung und zwei Durchbohrungen.

### Ausführungsbeispiele:

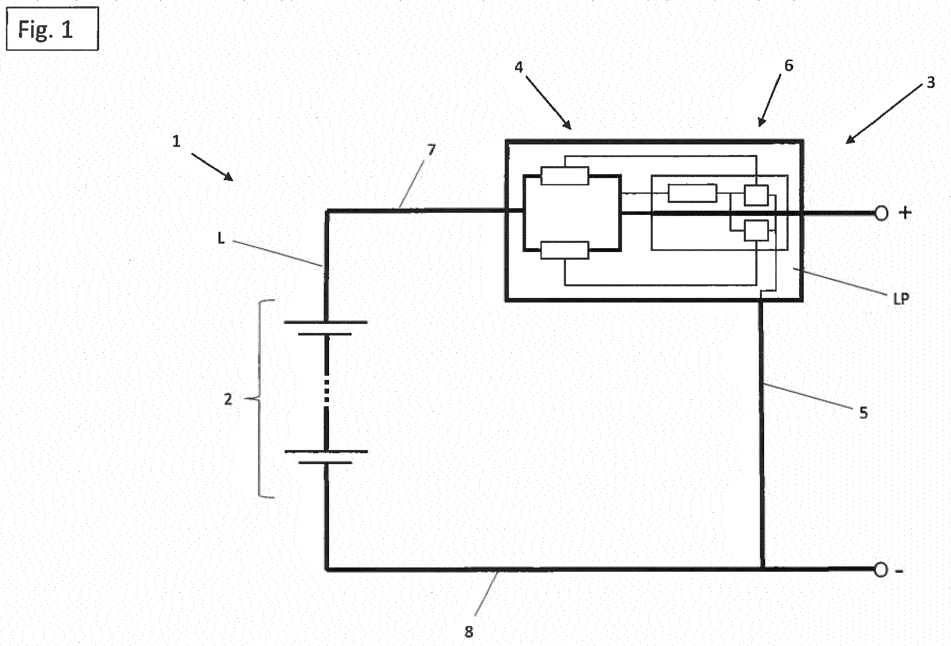

Figur 1 zeigt eine schematische Darstellung eines Akkupack 1 mit einer Vielzahl an Akkuzellen 2 und einer ersten Ausführungsform einer erfindungsgemäßen Schutzvorrichtung 3 zum Schutz des Akkupacks 1 vor einer Überspannung. Der Akkupack 1 kann auch als Akkumulator oder Batterie bezeichnet werden. Außerdem können die Akkuzellen 2 auch als Sekundarzellen bezeichnet werden.

Der Akkupack 1 kann dabei zur Versorgung einer Werkzeugmaschine mit elektrischer Energie dienen. Bei der Werkzeugmaschine kann es sich beispielsweise um eine Bohrmaschine, einen Schrauber, eine Säge, ein Schleifgerät oder dergleichen handeln. Die Werkzeugmaschine ist in den Figuren nicht gezeigt.

Die Schutzvorrichtung 3 enthält dabei im Wesentlichen eine Sicherungseinrichtung 4, eine Kurzschlussleitung 5 und eine Überwachungseinrichtung 6.

Wie in der Figur 1 dargestellt, kann die Schutzvorrichtung 3 entweder in der Plusleitung 7 oder in der Minusleitung 8 des Akkupacks 1 positioniert sein. Gemäß einer weiteren (nicht gezeigten) Ausgestaltungsform kann jeweils eine Schutzvorrichtung 4 in der entweder in der Plusleitung 7 und in der Minusleitung 8 des Akkupacks positioniert sein.

Die Sicherungseinrichtung 4 enthält wiederum eine erste Sicherung 4a und eine zweite Sicherung 4b. Wie den Figuren dargestellt, ist die erste Sicherung 4a und die zweite Sicherung 4b parallel zueinander geschaltet. Die erste und zweite Sicherung 4a, 4b sind als Schmelzsicherungen ausgestaltet. Es ist jedoch auch möglich, dass jede andere geeignete Art von Überstromschutzeinrichtung zur Ausgestaltung der Sicherung 4a, 4b verwendet werden kann.

Gemäß einer alternativen Ausgestaltungsform kann die Sicherungseinrichtung 4 auch mehr oder weniger als zwei Sicherungen enthalten. Die Sicherungen können dabei parallel oder auch in Serie zueinander verschaltet sein.

Wie in den Figuren gezeigt, enthält die Überwachungseinrichtung 6 im Wesentlichen einen Spannungskomparator 10, einen ersten Schalter 11 und einen zweiten Schalter 12. Sowohl der erste Schalter 11 als auch der zweite Schalter 12 sind dabei jeweils in Form eines Transistors ausgestaltet. Es ist zu beachten, dass gemäß einer vorteilhaften Ausgestaltungsform der Überwachungseinrichtung 6 zu jeder Sicherung 4a, 4b ein Schalter 11, 12 vorgesehen ist. Gemäß einer weiteren alternativen Ausgestaltungsform der Überwachungseinrichtung 6 kann jedoch auch vorgesehen sein, dass lediglich ein einziger Schalter 11, 12 für die erste und zweite Sicherung 4a, 4b enthalten. Es ist gemäß dieser Ausgestaltungsform aber auch möglich, dass ein Schalter 11, 12 zu mehr als zwei Sicherungen 4a, 4b zugeordnet ist. Entsprechend einer weiteren alternativen Ausgestaltungsform der Überwachungseinrichtung 6 kann jedoch wiederum vorgesehen sein, dass zwei oder mehr Schalter 11, 12 für lediglich eine einzige Sicherung 4a, 4b vorgesehen ist. Diese Ausgestaltungsform der Überwachungseinrichtung 6 ist insbesondere vorteilhaft, falls der Kurzschlussstrom einen relativ hohen Wert aufweist bzw. aufweisen kann und zu befürchten ist, dass ein einziger Schalter 11, 12 dem hohen Kurzschlussstrom nicht standhalten kann und kaputtgehen kann.

Die Verwendung mindestens eines Schalters 11, 12 ist jedoch zwingend erforderlich. Zu dem Mengenverhältnis zwischen Schalter 11, 12 und Sicherung 4a, 4b ist jedoch zu beachten, dass die Anzahl der Schalter 11, 12 mindestens der Anzahl der Sicherungen 4a, 4b entsprechen muss. Eine höhere Anzahl an Schaltern 11, 12 im Vergleich zu Sicherungen 4a, 4b ist dabei stets möglich.

Die Überwachungseinrichtung 6 ist insbesondere, aber nicht ausschließlich, dazu vorgesehen, die Werte der elektrischen Spannung zu überwachen, die in dem Akku bzw. in der Akkuzelle 2 anliegen. Der Spannungskomparator 10 ist hierzu mit den Akkuzellen sowohl mit der ersten als auch zweiten Sicherung 4a, 4b verbunden und dient zum Festzustellen, dass eine elektrische Spannung, welche in den Akkuzellen 2 anliegt, einen vorbestimmten Spannungsschwellwert überschreitet.

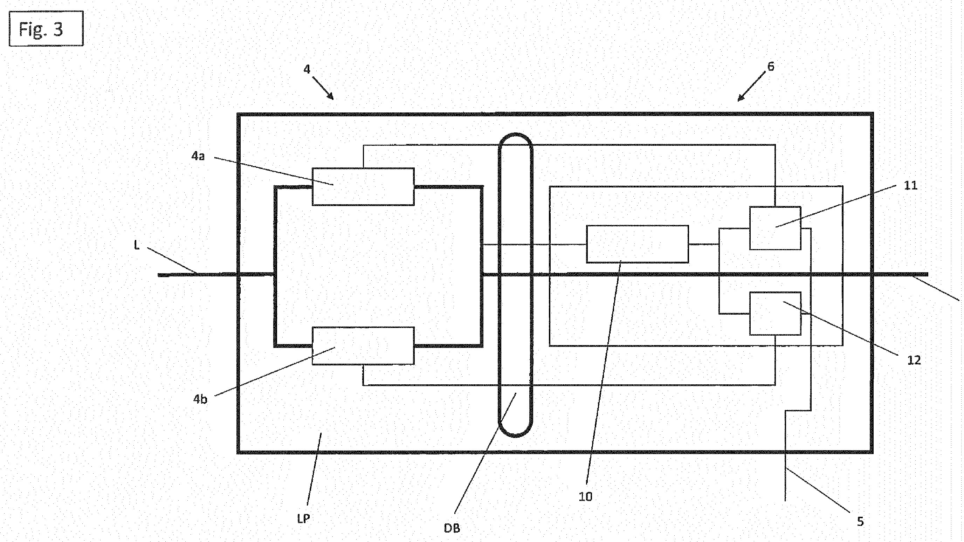

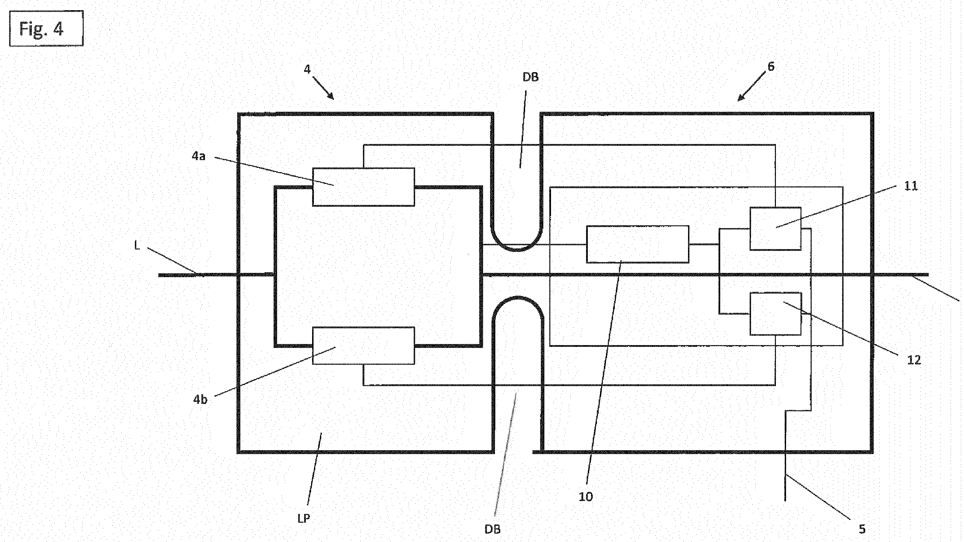

Die Kurzschlussleitung 5 ist Bestandteil einer Kurzschlussschaltung und dient zum Kurzschließen der Akkuzellen 2. Wie insbesondere in der Figur 3 und 4 dargestellt ist die Kurzschlussleitung 5 über den ersten Schalter 11 mit der ersten Sicherung 4a und über den zweiten Schalter 12 mit der zweiten Sicherung 4b verbunden.

Sowohl der erste und zweite Schalter 11, 12 ist jeweils mit dem Spannungskomparator 10 verbunden und dient zum wahlweisen Schließen bzw. Verbinden der Kurzschlussleitung 5, wodurch die Akkuzellen 2 entsprechend entweder über die erste oder zweite Sicherung 4a, 4b kurzgeschlossen werden. Durch das Kurzschließen der Akkuzellen 2 mit Hilfe der Kurzschlussleitung 5 kann ein elektrischer Strom durch die erste oder zweite Sicherung 4a, 4b fließen, der den Kurzschlussstromwert der jeweiligen Sicherung 4a, 4b übersteigt, sodass die als Schmelzsicherung ausgestaltete Sicherung 4a, 4b schmilzt und die elektrische Leitung L unterbricht.

Wenn beispielsweise aufgrund einer Fehlfunktion des Akkupacks 1 ein zu hoher elektrischer Strom durch die erste und/oder zweite Sicherung 4a, 4b fließt, steigt die in der ersten und/oder zweiten Sicherung 11, 12 anliegende Spannung entsprechend. Der mit der ersten und zweiten Sicherung 4a, 4b verbundene Spannungskomparator 10 vergleicht den in den Akkuzellen 2 anliegende Spannungswert mit einem vorbestimmten Spannungsschwellwert, welcher hierzu in dem Spannungskomparator 10 gespeichert ist. Wenn der in den Akkuzellen 2 anliegende Spannungswert den vorbestimmten Spannungsschwellwert für eine vorbestimmte Zeitdauer sowie um einen vorbestimmten Wert übersteigt, sendet der Spannungskomparator 10 ein entsprechendes Signal an den ersten und/oder zweiten Schalter 11, 12. Durch das von dem Spannungskomparator 10 gesendete Signal wird beispielsweise der erste Schalter 11 geschlossen, sodass mittels der Kurzschlussleitung 5 die Akkuzellen 2 durch die erste Sicherung 4a kurzgeschlossen werden. Durch das Kurzschließen steigt der Wert des durch die erste Sicherung 4a fließenden Stroms über den Kurzschlussstromwert der ersten Sicherung 4a, sodass die als Schmelzsicherung ausgestaltete Sicherung schmilzt.

Wie der Figur 3 zu entnehmen ist, enthält die Schutzvorrichtung 3 eine Leiterplatte LP mit einer länglichen Durchbohrung DB. Die Durchbohrung DB kann auch als Aussparung in der Leiterplatte LP bezeichnet werden und dient zur thermischen Trennung der Sicherungseinrichtung 4 und der Überwachungseinrichtung 6. Durch die Unterbrechung der Leiterplatte LP in Form der Durchbohrung DB wird weniger Wärme von den Sicherungen zu dem wärmeempfindlichen Spannungskomparator geleiltet. Mit anderen Worten: die Durchbohrung dient als Grenze zwischen der Sicherungseinrichtung 4 und der Überwachungseinrichtung 6.

Bei einer Länge der Leiterplatte LP von 30 mm und einer Höhe von 10 mm hat die Durchbohrung DB eine Breite von ungefähr 1 mm und eine Länge von ungefähr 7 mm.

Wie in Figur 4 gezeigt kann die Leiterplatte LP auch eine erste und zweite eine als Aussparung ausgestaltete Durchbohrung DB aufweisen. Gemäß einer alternativen (in den Figuren nicht gezeigten) Ausführungsform kann die Leiterplatte LP auch mehr als zwei Durchbohrungen DP enthalten.

## Patentansprüche

1. Schutzvorrichtung (3) zum Schutz eines Akkupacks (1) mit wenigstens einer Akkuzelle (2) vor einer Überspannung in wenigstens einer Leitung (L) des Akkupacks (1), **gekennzeichnet durch**
- eine Sicherungseinrichtung (4) mit wenigstens einer Sicherung (4a, 4b);
- eine Kurzschlussleitung (5) zum wahlweisen Kurzschließen der wenigstens eine Akkuzelle (2) über die wenigstens eine Sicherung (4a, 4b); und
- eine Überwachungseinrichtung (6) mit wenigstens einem Spannungskomparator (10) zum Detektieren eines Überschreitens eines Spannungsschwellwerts durch einen von der Überwachungseinrichtung (6) erfassten Spannungswert und wenigstens einem Schalter (11, 12) zum wahlweisen Schließen der Kurzschlussleitung (5), wenn der durch den Spannungskomparator (10) erfasste Spannungswert den Spannungsschwellwert für eine vorbestimmte Zeitdauer um einen vorbestimmten Spannungswert übersteigt, sodass ein durch die wenigstens eine Sicherung (4a, 4b) fließender Strom einen Kurzschlussstromwert der wenigstens einen Sicherung (4a, 4b) übersteigt, wodurch die wenigstens eine Sicherung (4a, 4b) die wenigstens eine Leitung (L) des Akkupacks (2) unterbricht.

2. Schutzvorrichtung (3) nach Anspruch 1,
**dadurch gekennzeichnet, dass** die wenigstens eine Sicherung (4a, 4b) als Schmelzsicherung ausgestaltet ist.

3. Schutzvorrichtung (3) nach Anspruch 1 oder 2,
**dadurch gekennzeichnet, dass** die Schutzvorrichtung (3) eine Leiterplatte (LP) enthält, welche wenigstens eine Durchbohrung (DB) zur thermischen Trennung der Sicherungseinrichtung (4) und der Überwachungseinrichtung (6) aufweist.

4. Schutzvorrichtung (3) nach wenigstens einem der Ansprüche 1 bis 3,
**dadurch gekennzeichnet, dass** der wenigstens eine Schalter (11, 12) als Transistor ausgestaltet ist.

5. Schutzvorrichtung (3) nach wenigstens einem der Ansprüche 1 bis 4,
**dadurch gekennzeichnet, dass** für jede Sicherung (4a, 4b) wenigstens ein Schalter (11, 12) vorgesehen ist.

6. Schutzvorrichtung (3) nach wenigstens einem der Ansprüche 1 bis 5,
**dadurch gekennzeichnet, dass** die Sicherungseinrichtung (4) in der Plusleitung (7) oder in der Minusleitung (8) des Akkupacks (1) positioniert ist.

7. Verfahren zum Schutz eines Akkupacks (1) vor einer Überspannung, wobei der Akkupack (1) wenigstens eine Akkuzelle (2) sowie eine Schutzvorrichtung (3) mit einer Sicherungseinrichtung (4), welche wenigstens eine Sicherung (4a, 4b) enthält, einer Kurzschlussleitung (5) zum wahlweisen Kurzschließen der wenigstens eine Akkuzelle (2) über die wenigstens eine Sicherung (4a, 4b), einer Überwachungseinrichtung (6) mit wenigstens einem Spannungskomparator (10) und wenigstens einem Schalter (11, 12) zum wahlweisen Schließen der Kurzschlussleitung (5) enthält,
**gekennzeichnet durch** die Verfahrensschritte
- Detektieren eines Überschreitens eines Spannungsschwellwerts durch einen von der Überwachungseinrichtung (6) erfassten Spannungswert mit Hilfe des Spannungskomparators (10) und
- Schließen der Kurzschlussleitung (5), wenn der durch den Spannungskomparator (10) erfasste Spannungswert den Spannungsschwellwert für eine vorbestimmte Zeitdauer um einen vorbestimmten Spannungswert übersteigt, sodass ein durch die wenigstens eine Sicherung (4a, 4b) fließender Strom einen Kurzschlussstromwert der wenigstens einen Sicherung (4a, 4b) übersteigt, wodurch die wenigstens eine Sicherung (4a, 4b) die wenigstens eine Leitung (L) des Akkupacks (1) unterbricht.
